# EUROPÄISCHE PATENTSCHRIFT

(11) **EP 3 022 081 B1**
(45) Veröffentlichungstag und Bekanntmachung des Hinweises auf die Patenterteilung: **04.12.2019**
(21) Anmeldenummer: 14739181.7
(22) Anmeldetag: 16.07.2014
(51) Int. Cl.: B60N 2/015, B60N 2/36

(54) **VERRIEGELUNGSVORRICHTUNG**
LOCKING DEVICE
DISPOSITIF DE VERROUILLAGE

(30) Priorität: 16.07.2013 DE 102013011803
(43) Veröffentlichungstag der Anmeldung: 25.05.2016
(73) Patentinhaber: Adient Luxembourg Holding S.à r.l., 1855 Luxembourg (LU)
(72) Erfinder: GORDEENKO, Igor, 50226 Frechen (DE); VEDDER, Andreas, 42781 Haan (DE); HANDL, Patrick, 50739 Köln (DE)
(74) Vertreter: Kutzenberger Wolff & Partner
(86) Internationale Anmeldenummer: PCT/EP2014/065221
(87) Internationale Veröffentlichungsnummer: WO 2015/007766

(56) Entgegenhaltungen:
- WO-A1-2013/021680
- DE-U1- 20 304 508
- JP-A- 2012 035 651

## Beschreibung

Die vorliegende Erfindung betrifft eine Verriegelungsvorrichtung für einen Fahrzeugsitz zur Verriegelung der Rückenlehne an einem Sitzteil und/oder der Karosserie des Fahrzeuges mit einem Sperrhaken, der von einer entriegelten in eine verriegelnde Stellung bewegbar ist, in der er verriegelnd mit einem Bolzen zusammenwirkt.

Derartige Verriegelungsvorrichtungen sind aus dem Stand der Technik, beispielsweise der WO 2010/054860 A2 und der DE 20 2011 100 040 U1, hinlänglich bekannt.

Es war die Aufgabe der vorliegenden Erfindung, die bekannten Verriegelungsvorrichtungen bezüglich Sicherheit, Komfort und/oder Herstellbarkeit zu verbessern. WO 2013/021680 A1 offenbart eine Verriegelungseinrichtung für Kraftfahrzeugsitze, bei der eine Halteklaue drehbar um eine Schwenk- und Schiebeachse drehbar gelagert ist, wobei die Halteklaue beim Verriegeln mit dem Verriegelungsbolzen zusammenwirkt. DE 203 04 508 U1 lehrt eine Vorrichtung zum Verbinden eines Fahrzeugsitzes mit einem Fahrzeugboden. JP 2012 035651 A lehrt einen Mechanismus zum Halten eines Sitzes in einem zusammengefalteten Zustand.

Gelöst wird die Aufgabe mit einer Verriegelungsvorrichtung für einen Fahrzeugsitz zur Verriegelung der Rückenlehne an einem Sitzteil und/oder der Karosserie des Fahrzeuges mit einem Sperrhaken gemäß Anspruch 1.

Die vorliegende Erfindung betrifft eine Verriegelungsvorrichtung für einen Fahrzeugsitz. Mit dieser Verriegelungsvorrichtung wird beispielsweise die Rückenlehne an dem Sitzteil oder an der Karosserie des Fahrzeugs verriegelt. Die erfindungsgemäße Verriegelung weist einen Sperrhaken auf, der beispielsweise an der Rückenlehne vorgesehen ist und der in seiner verriegelnden Stellung mit einem Bolzen zusammenwirkt, der beispielsweise an dem Sitzteil des Fahrzeugsitzes oder an der Karosserie des Fahrzeugs angeordnet ist. Erfindungsgemäß ist der Sperrhaken nun so ausgebildet und/oder gelagert, dass er bei seiner Schließbewegung sowohl eine translatorische als auch eine rotatorische Bewegung ausführt. Dadurch kann der Form- und/oder Kraftschluss zwischen dem Bolzen und dem Sperrhaken verbessert werden und mögliche Toleranzen können besser ausgeglichen werden. Beispielweise weist die Verriegelungsvorrichtung eine Hülse auf, um die sich der Sperrhaken dreht. Vorzugsweise weist der Sperrhaken ein Langloch auf, in das besonders bevorzugt die Hülse eingreift. Durch die Kombination Hülse/Langloch kann der Sperrhaken eine rotative Bewegung um die Hülse und eine translatorische Bewegung entlang des Langlochs durchführen.

Vorzugsweise weist die Verriegelungsvorrichtung ein Federmittel auf, das den Sperrhaken rotatorisch und translatorisch in Richtung seiner verriegelnden Stellung vorspannt.

Erfindungsgemäss ist eine Verriegelungsvorrichtung vorgesehen, die einen Aufnahmehebel mit einem Betätigungsmittel aufweist, der drehbar an einem Lagermittel, insbesondere einer Lagerbuchse, gelagert ist, wobei beim Übergang in die verriegelnde Stellung der Bolzen den Aufnahmehebel antreibt.

Vorzugsweise treibt die Drehung des Betätigungsmittels den Sperrhaken zumindest zeitweise an und bringt ihn insbesondere von einer verriegelnden Position, in der er mit dem Bolzen in Eingriff steht, in eine entriegelte Position. Besondere bevorzugt hält das Betätigungsmittel den Sperrhaken in dieser Position. Umgekehrt gibt das Betätigungsmittel den Sperrhaken vorzugsweise in einer bestimmten Position wieder frei, damit er wieder mit dem Bolzen in Eingriff gelangen kann.

Vorzugsweise weist die Verriegelungsvorrichtung ein Spannmittel, insbesondere einen Spannexzenter, auf, das/der mit dem Sperrhaken zusammenwirkt und diesen gegen den Bolzen und/oder den Aufnahmehebel spannt. Vorzugsweise gelangt das Spannmittel erst dann in Eingriff mit dem Sperrhaken, nachdem dieser bereits in seiner verriegelnden Stellung ist, d. h. bereits mit dem Bolzen im Eingriff ist und/oder sich bereits in der unmittelbaren Umgebung des Bolzens befindet. Besonders bevorzugt bewegt das Spannmittel den Sperrhebel translatorisch.

Vorzugsweise weist die Verriegelungsvorrichtung ein Mittel auf, das eine Bewegung des Spannmittels auslöst. Vorzugsweise wird eine Bewegung des Spannmittels erst dann ausgelöst, wenn der Sperrhaken bereits im Eingriff mit dem Bolzen ist.

Gemäß der vorliegenden Erfindung sind das Spannmittel und der Aufnahmehebel um dasselbe Lagermittel drehbar vorgesehen, wobei das Spannmittel und der Aufnahmehebel vorzugsweise zumindest teilweise unabhängig voneinander drehbar um dieses Lagermittel vorgesehen sind. Vorzugsweise handelt es sich dabei um eine Lagerbuchse.

Erfindungsgemäß ist zwischen dem Spannmittel und dem Aufnahmehebel ein Federmittel vorgesehen, das das Spannmittel und den Aufnahmehebel gegensinnig drehend spannt. Vorzugsweise handelt es sich bei dem Federmittel um eine Torsionsfeder, deren einer Schenkel an dem Spannmittel und dessen anderer Schenkel an dem Aufnahmehebel anliegt. Durch eine Drehung des Betätigungshebels wird, vorzugsweise über den Mitnehmer, auch das Spannmittel gedreht und dadurch wird die Federkraft auf den Aufnahmehebel erhöht oder vermindert.

Erfindungsgemäß spannt das Spannmittel den Bolzen zwischen dem Sperrhaken und dem Aufnahmehebel ein.

Im Folgenden werden die Erfindungen anhand der Figuren 1 - 3 erläutert. Diese Erläuterungen sind lediglich beispielhaft und schränken den allgemeinen Erfindungsgedanken nicht ein.
Figur 1 zeigt die erfindungsgemäße Verriegelungsvorrichtung.
Figuren 2a - e zeigen das Verriegeln der erfindungsgemäßen Verriegelungsvorrichtung.
Figur 3 zeigt eine Explosionszeichnung der Verriegelungsvorrichtung.

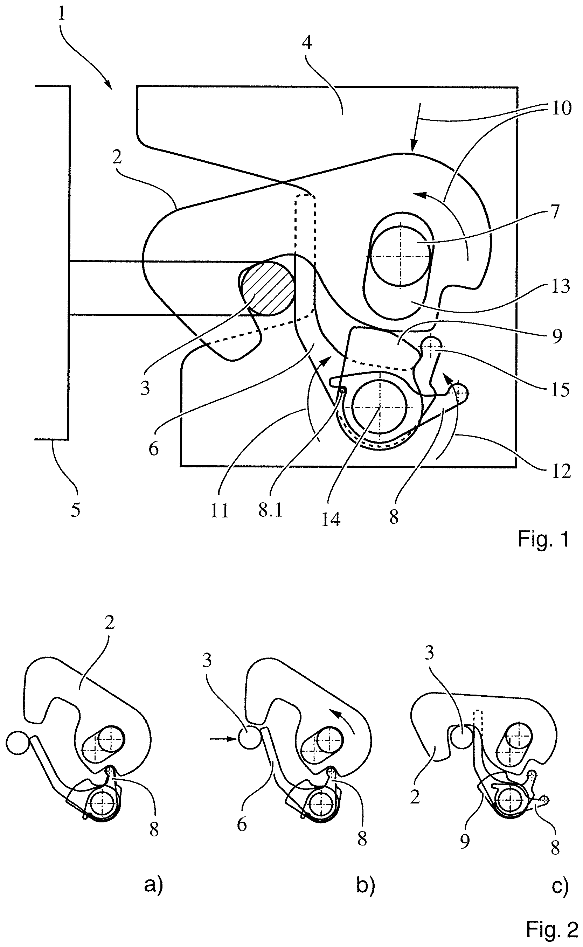

Figur 1 zeigt die erfindungsgemäße Verriegelungsvorrichtung 1, die einen Sperrhaken 2 aufweist, der in dem dargestellten, verriegelnden Zustand mit einem Bolzen kraft- und/oder formschlüssig im Eingriff steht und dadurch verhindert, dass sich ein erstes Teil 4, beispielsweise eine Rückenlehne, relativ zu einem zweiten Teil 5, beispielsweise einem Sitzteil, bewegt. Der Sperrhaken 2 ist drehbar an einem Lagermittel 7, insbesondere einer Lagerbuchse 7, gelagert. Des Weiteren weist der Sperrhaken 2 ein Langloch 13 auf, so dass er nicht nur eine rotative, sondern auch eine translatorische Bewegung durchführen kann.

Das Lagermittel 7 greift vorzugsweise in das Langloch 13 ein. Vorzugsweise weist die Verriegelungsvorrichtung ein Federmittel auf, dessen Wirkrichtung durch das Bezugszeichen 10 symbolisiert ist, d. h. dieses Federmittel spannt den Sperrhaken so vor, dass er aufgrund der Federkraft sowohl eine translatorische als auch rotatorische Bewegung vollführen möchte, um in Eingriff mit dem Bolzen 3 zu gelangen. Zusätzlich weist die Verriegelungsvorrichtung einen, vorzugsweise zwei-schenkeligen, Aufnahmehebel 6 auf, wobei der zweite Schenkel ein Sperrschenkel 15 ist. Der Aufnahmehebel ist um ein Lagermittel 14, hier eine Lagerbuchse 14, drehbar vorgesehen. Ferner weist die Verriegelungsvorrichtung ein Betätigungsmittel, hier einen Betätigungshebel 8, auf, das vorzugsweise ebenfalls drehbar an dem Lagermittel 14 gelagert ist. Vorzugsweise ist an demselben Lagermittel ebenfalls drehbar ein Spannmittel 9, vorzugsweise ein Spannexzenter 9, vorgesehen, der im verriegelten Zustand mit dem Sperrhaken 2 im Eingriff steht und diesen bewegt, vorzugsweise translatorisch verschiebt, so dass der Form- und/oder Kraftschluss zwischen dem Bolzen und dem Sperrhaken, insbesondere dessen Nase, verbessert wird. Die Bewegung des Spannmittels 9 ist zumindest zeitweise unabhängig von der Bewegung des Betätigungshebels 8. Vorzugsweise ist im Bereich des Lagermittels 14 ein weiteres Federmittel, insbesondere eine Torsionsfeder, vorgesehen, deren Wirkrichtung durch die Pfeile mit den Bezugszeichen 11, 12 gekennzeichnet ist, d. h. ein Schenkel spannt hier das Spannmittel 9 im Uhrzeigersinn drehend und ein Schenkel den Aufnahmehebel 6, hier gegen den Uhrzeigersinn drehend, vor. Durch die Bewegung nur eines Elementes 6, 9, wird durch das Federmittel die Vorspannkraft auf das andere Element 6,9 erhöht oder vermindert.

Das Verriegeln der erfindungsgemäßen Verriegelungsvorrichtung wird nun anhand der Figuren 2a - 2e erläutert.

Figur 2a zeigt die erfindungsgemäße Verriegelungsvorrichtung im entriegelten Zustand. Der Sperrhaken 2 und der Betätigungshebel 8 werden von dem Sperrschenkel 15 des Aufnahmehebels 6 in einer entriegelten Stellung gehalten. Der Aufnahmehebel 6 liegt vorzugsweise an dem Bolzen 3 an. Wird nun die Verriegelung der Verriegelungsvorrichtung eingeleitet, so drückt, wie durch den horizontalen Pfeil dargestellt, der Bolzen 3 gegen den Aufnahmehebel 6, so dass sich dieser und damit das Betätigungsmittel 8 im Uhrzeigersinn um das Drehlager 14 dreht. Dadurch wird eine Drehung des Sperrhakens 2, hier gegen den Uhrzeigersinn, die durch die Federkraft bewirkt wird, freigegeben, was ebenfalls durch einen gekrümmten Pfeil symbolisiert ist (vgl. Figur 2b). Sobald der Sperrhaken 2 an dem Lagerbolzen 3 anliegt (vgl. Figur 2c), wird eine Bewegung des Spannmittels 9, hier des Spannexzenters, im Uhrzeigersinn drehend bedingt durch die Federkraft 11 ausgelöst.

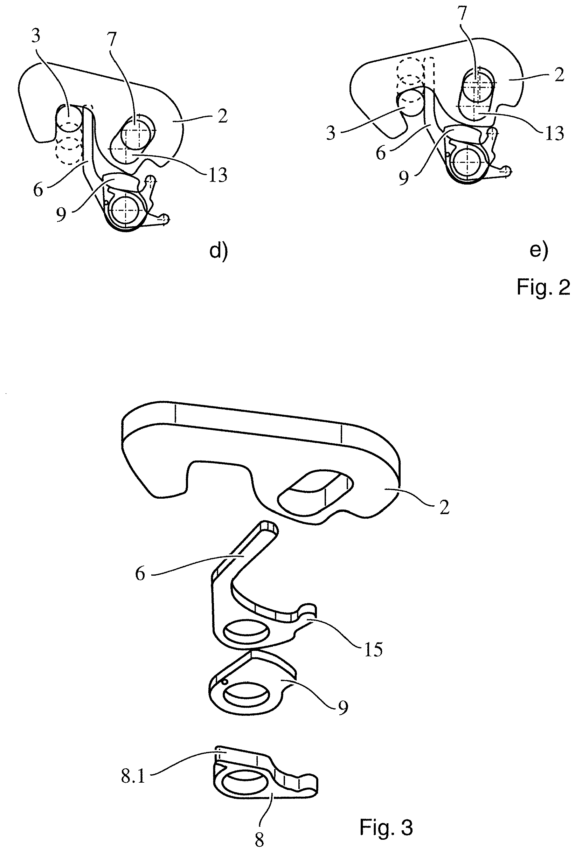

Dadurch wird der Sperrhaken 2, wie in den Figuren 2d und 2e zu sehen ist, translatorisch entlang des Langlochs 13 und/oder rotatorisch um das Lager 7 bewegt und der Eingriff zwischen dem Sperrhaken 2 und dem Bolzen 3 und dadurch auch der Kraftfluss zwischen diesen beiden Teilen noch verbessert. Insbesondere wird der Lagerbolzen 3 zwischen der Nase des Sperrhakens 2 und dem Aufnahmehebel 6 spielfrei eingespannt.

Die Entriegelung erfolgt umgekehrt. Bei einer Betätigung des Betätigungshebels wird beispielsweise über einen Mitnehmer zunächst das Spannelement gegen den Uhrzeigersinn gedreht. Danach wird der Sperrhaken in Richtung seiner entriegelnden Stellung gedreht. Sobald der Sperrhaken den Bolzen frei gegeben hat, dreht sich der Aufnahmehebel aufgrund der Federkraft 12 gegen den Uhrzeigersinn und dessen Sperrschenkel 15 dreht den Sperrhaken weiter in seine entriegelnde Endstelllung.

Figur 3 zeigt eine Explosionsdarstellung der Verriegelungsvorrichtung. Alle dargestellten Elemente 2, 6. 8, 9, 15 sind um das Lagermittel 14 drehbar gelagert. Der Aufnahmehebel 6 und der Sperrschenkel 15 sind vorzugsweise einstückig vorgesehen. Dasselbe gilt vorzugsweise für das Betätigungsmittel 8 und den Mitnehmer 8.1.

### Bezugszeichenliste:

- 1: Verriegelungsvorrichtung
- 2: Sperrhaken
- 3: Bolzen
- 4: erstes Teil
- 5: zweites Teil
- 6: Aufnahmehebel
- 7: Lagerbuchse
- 8: Betätigungsmittel, Betätigungshebel
- 8.1: Mitnehmer
- 9: Spannmittel, Spannexzenter
- 10: Wirkrichtung eines Sperrhakenfedermittels
- 11: Wirkrichtung der Spannmittelfeder
- 12: Wirkrichtung der Aufnahmehebelfeder
- 13: Langloch
- 14: Lagermittel, Lagerbuchse
- 15: Sperrschenkel des Aufnahmehebels 6

## Patentansprüche

1. Verriegelungsvorrichtung (1) für einen Fahrzeugsitz zur Verriegelung der Rückenlehne an einem Sitzteil und/oder der Karosserie des Fahrzeuges mit einem Sperrhaken (2), der von einer entriegelten in eine verriegelnde Stellung bewegbar ist, in der er verriegelnd mit einem Bolzen (3) zusammenwirkt, wobei sich der Sperrhaken (2) bei seiner Bewegung von der entriegelnden zu der verriegelnden Stellung und umgekehrt rotatorisch und translatorisch bewegt, **dadurch gekennzeichnet, dass** die Verriegelungsvorrichtung (1) einen Aufnahmehebel (6) mit einem Betätigungsmittel (8) aufweist, die drehbar an einem Lagermittel (7), insbesondere einer Lagerbuchse, gelagert sind, wobei beim Übergang in die verriegelnde Stellung der Bolzen (3) den Aufnahmehebel (6) antreibt, wobei ein Spannmittel (9) und der Aufnahmehebel (6) um dasselbe Lagermittel (14) drehbar vorgesehen sind, wobei zwischen dem Spannmittel (9) und dem Aufnahmehebel (6) ein Federmittel vorgesehen ist, das das Spannmittel (9) und den Aufnahmehebel (6) gegensinnig drehend spannt, wobei das Spannmittel (9) den Bolzen (3) zwischen dem Sperrhaken (2) und dem Aufnahmehebel (6) einspannt.

2. Verriegelungsvorrichtung (1) nach Anspruch 1, **dadurch gekennzeichnet, dass** sie ein Federmittel aufweist, das den Sperrhaken (2) rotatorisch und translatorisch in Richtung seiner verriegelnden Stellung vorspannt.

3. Verriegelungsvorrichtung (1) nach Anspruch 2, **dadurch gekennzeichnet, dass** die Drehung des Betätigungsmittels (8) den Sperrhaken (2) zumindest zeitweise antreibt.

4. Verriegelungsvorrichtung (1) nach einem der voranstehenden Ansprüche, **dadurch gekennzeichnet, dass** das Spannmittel (9), insbesondere ein Spannexzenter, mit dem Sperrhaken (2) zusammenwirkt und diesen gegen den Bolzen und/oder den Aufnahmehebel spannt.

5. Verriegelungsvorrichtung nach Anspruch 4, **dadurch gekennzeichnet, dass** sie ein Mittel aufweist, das eine Bewegung des Spannmittels (9) auslöst.

6. Verriegelungsvorrichtung (1) nach einem der voranstehenden Ansprüche, **dadurch gekennzeichnet, dass** der Sperrhaken (2) ein Langloch (13) aufweist, in dem eine Lagerbuchse (7) vorgesehen ist.

## Claims

1. Locking device (1) for a vehicle seat for locking the backrest to a seat part and/or to the body of the vehicle, with a catch (2) which is movable from an unlocked position into a locking position, in which said catch interacts in a locking manner with a pin (3), wherein the catch (2) moves in a rotatory and translatory manner during its movement from the unlocking position to the locking position and vice-versa, **characterized in that** the locking device (1) has a receiving lever (6) with an actuating means (8), which receiving lever and actuating means are mounted rotatably on a bearing means (7), in particular a bearing bush, wherein the pin (3) drives the receiving lever (6) during the transition into the locking position, wherein a clamping means (9) and the receiving lever (6) are provided rotatably about the same bearing means (14), wherein a spring means is provided between the clamping means (9) and the receiving lever (6), said spring means clamping the clamping means (9) and the receiving lever (6) in a manner rotating in opposite directions, wherein the clamping means (9) clamps the pin (3) between the catch (2) and the receiving lever (6).

2. Locking device (1) according to Claim 1, **characterized in that** said locking device has a spring means which pretensions the catch (2) in a rotatory and translatory manner in the direction of the locking position thereof.

3. Locking device (1) according to Claim 2, **characterized in that** the rotation of the actuating means (8) at least temporarily drives the catch (2).

4. Locking device (1) according to one of the preceding claims, **characterized in that** the clamping means (9), in particular a clamping eccentric, interacts with the catch (2) and clamps the latter against the pin and/or the receiving lever.

5. Locking device according to Claim 4, **characterized in that** said locking device has a means which triggers a movement of the clamping means (9).

6. Locking device (1) according to one of the preceding claims, **characterized in that** the catch (2) has an elongated hole (13) in which a bearing bush (7) is provided.

## Revendications

1. Dispositif de verrouillage (1) destiné à un siège de véhicule pour verrouiller le dossier à une assise et/ou à la carrosserie du véhicule, le dispositif de verrouillage comprenant un cliquet (2) pouvant se déplacer d'une position de déverrouillage à une position de verrouillage dans laquelle il coopère avec un boulon (3) pour effectuer le verrouillage, le cliquet (2) se déplaçant en rotation et en translation pendant son mouvement de la position de déverrouillage à la position de verrouillage et inversement, **caractérisé en ce que** le dispositif de verrouillage (1) comporte un levier de réception (6) muni d'un moyen d'actionnement (8), lesquels sont logés à rotation au niveau d'un moyen formant palier (7), en particulier un coussinet, le boulon (3) entraînant le levier de réception (6) pendant le passage en position de verrouillage, un moyen de serrage (9) et le levier de réception (6) étant prévus de manière rotative sur le même moyen formant palier (14), un moyen à ressort étant prévu entre le moyen de serrage (9) et le levier de réception (6) et serrant le moyen de serrage (9) et le levier de réception (6) par rotation en sens opposé, le moyen de serrage (9) serrant le boulon (3) entre le cliquet (2) et le levier de réception (6).

2. Dispositif de verrouillage (1) selon la revendication 1, **caractérisé en ce qu'**il comporte un moyen formant ressort qui précontraint le cliquet (2) en rotation et en translation en direction de sa position de verrouillage.

3. Dispositif de verrouillage (1) selon la revendication 2, **caractérisé en ce que** la rotation du moyen d'actionnement (8) entraîne le cliquet (2) au moins temporairement.

4. Dispositif de verrouillage (1) selon l'une des revendications précédentes, **caractérisé en ce que** le moyen de serrage (9), notamment un excentrique de serrage, coopère avec le cliquet (2) et serre celui-ci contre le boulon et/ou le levier de réception.

5. Dispositif de verrouillage selon la revendication 4, **caractérisé en ce qu'**il comporte un moyen qui déclenche un mouvement du moyen de serrage (9).

6. Dispositif de verrouillage (1) selon l'une des revendications précédentes, **caractérisé en ce que** le cliquet (2) comporte un trou oblong (13) dans lequel est prévu un coussinet (7).
